Europäisches Patentamt

European Patent Office

Office européen des brevets

(19)

(11) **EP 1 257 333 B1**

(12) **EUROPÄISCHE PATENTSCHRIFT**

| | |
|---|---|
| (45) Veröffentlichungstag und Bekanntmachung des Hinweises auf die Patenterteilung:<br>**31.05.2006 Patentblatt 2006/22** | (51) Int Cl.:<br>**B01D 1/00** (2006.01) |
| (21) Anmeldenummer: **01909766.6** | (86) Internationale Anmeldenummer:<br>**PCT/EP2001/001752** |
| (22) Anmeldetag: **16.02.2001** | (87) Internationale Veröffentlichungsnummer:<br>**WO 2001/060477 (23.08.2001 Gazette 2001/34)** |

(54) **VERFAHREN ZUR BEFÜLLUNG EINER FILTERVORRICHTUNG, VORZUGSWEISE HOHLFASERDIALYSATOR MIT GELOCKTEN HOHLFASERN**

PROCESS OF FILLING A FILTER DEVICE, PREFERABLY A HOLLOW FIBRE DIALYSER, COMPRISING CURLED HOLLOW FIBRES

PROCEDE DE REMPLISSAGE D'UN DISPOSITIF DE FILTRATION, DE PREFERENCE DIALYSEUR A FIBRES CREUSES BOUCLEES

| | |
|---|---|
| (84) Benannte Vertragsstaaten:<br>**AT BE CH CY DE DK ES FI FR GB GR IE IT LI LU MC NL PT SE TR** | (74) Vertreter: **Laufhütte, Dieter**<br>**Lorenz-Seidler-Gossel**<br>**Widenmayerstrasse 23**<br>**80538 München (DE)** |
| (30) Priorität: **17.02.2000 DE 10007327** | |
| (43) Veröffentlichungstag der Anmeldung:<br>**20.11.2002 Patentblatt 2002/47** | (56) Entgegenhaltungen:<br>**EP-A- 0 168 783**    **EP-A- 0 844 015**<br>**DE-A- 2 842 958**    **DE-A- 2 851 687** |
| (60) Teilanmeldung:<br>**06002619.2** | • **PATENT ABSTRACTS OF JAPAN vol. 0150, no. 07 (C-0794), 9. Januar 1991 (1991-01-09) & JP 02 258035 A (TOYOBO CO LTD), 18. Oktober 1990 (1990-10-18)** |
| (73) Patentinhaber: **Fresenius Medical Care Deutschland GmbH**<br>**61352 Bad Homburg v.d.H. (DE)** | • **DATABASE WPI Week 199751 Derwent Publications Ltd., London, GB; AN 1997-553592 XP002180398 & JP 09 266947 A ((TEIJ) TEIJIN LTD), 14. Oktober 1997 (1997-10-14)** |
| (72) Erfinder:<br>• **HEILMANN, Klaus**<br>**66606 St. Wendel (DE)**<br>• **FRITZSCHE, Steffen**<br>**66636 Tholey (DE)** | • **PATENT ABSTRACTS OF JAPAN vol. 1999, no. 09, 30. Juli 1999 (1999-07-30) & JP 11 090187 A (NOK CORP), 6. April 1999 (1999-04-06)**<br>• **DATABASE WPI Week 199612 Derwent Publications Ltd., London, GB; AN 1996-110594 XP002180399 & JP 08 010322 A ((TEIJ) TEIJIN LTD), 16. Januar 1996 (1996-01-16)** |

**Beschreibung**

Die Erfindung betrifft ein Verfahren zur Befüllung einer Filtervorrichtung, vorzugsweise eines Hohlfaserdialysators für die Hämodialyse.

Hohlfaserdialysatoren gängiger Bauart weisen ein zylinderförmiges Faserbündel auf, das in einem zylindrischen Filtergehäuse angeordnet ist. Durch das Innere der Fasern fließt Blut und im Raum zwischen Fasern und Filtergehäuse fließt das Dialysat im Gegenstrom zum Blut. Aufgabe eines Dialysators ist der Stoffaustausch durch die Wand der Hohlfasern. Innerhalb aller Fasern fließt das Blut im allgemeinen mit einer gleichmäßigen Geschwindigkeit. Für eine optimale Austauschwirkung sollte außerhalb der Hohlfasern das Dialysat ständig ausgetauscht werden. Auf diese Weise kann ein dauerhafter hoher Konzentrationsunterschied zwischen Faserinnerem und Faseräußerem als treibende Kraft für einen diffusiven Stoffaustausch gewährleistet werden.

Bei einem bauüblichen Dialysator sind sowohl der Zugang wie auch der Abgang des Dialysats mit den außenliegenden Fasern des Faserbündels verbunden. Daher kann nicht von vornherein gewährleistet sein, daß alle Fasern im Faserbündel mit der gleichen Menge an Dialysat umspült werden. Nimmt man eine laminare Strömung des Dialysates im Dialysatraum an, kann theoretisch das gesamte Dialysat zwischen Faserbündel und Gehäuse hindurchfließen, ohne daß das Dialysat in das Bündelinnere eindringt. Damit würde die durch das Hohlfaserbündel zur Verfügung gestellte Austauschfläche nicht genutzt. Das Dialysat fließt in diesem Fall auf dem Weg des geringsten Widerstandes vom Eingang entlang der Fasern in - bezogen auf den Dialysator - axialer Richtung zum Auslaß.

Aus der DE 2851687 C2 ist es zur Verbesserung der Durchdringung der Hohlfaserbündel durch die außerhalb der Hohlfasern fließende Flüssigkeit bekannt, daß die Hohlfasern gewellt bzw. gekräuselt ausgeführt werden.

Auch aus der US 3616928 ist ein Stoffaustauschapparat mit gekräuselten Hohlfaserbündeln bekannt. Ähnliches ergibt sich aus der JP 02 258035 A.

In der EP 314581 B1 ist ein Oxygenator beschrieben, der in dem zylindrischen Gehäuse Hohlfasermembranbündel aufweist, die ebenfalls gekräuselt sind.

In bekannten Dialysatoren werden gekräuselte oder gelockte Fasern mit einer Wellenlänge von etwa 28 mm eingesetzt. Dabei werden die Hohlfasern nach dem Stand der Technik in der Regel in ihrer Kräuselung bzw. Lockung unabhängig von den geometrischen Gegebenheiten im Dialysator verwendet.

Um die Leistung eines Dialysators zu erhöhen, gab es bereits Lösungsansätze, bei denen zu den Dialysefasern andere Fasern in das Bündel eingebracht worden sind.

Andere Lösungen sahen vor, kleine Bündel aus Dialysefasern mit einem Garn zu umwickeln oder zu verknoten, und diese kleinen Bündel zu großen Bündeln zusammenzufassen. Hierdurch sollte eine verbesserte Durchströmung des Hohlfaserbündels durch die die Hohlfasern umspülende Flüssigkeit, d.h. im Falle des Dialysators des Dialysates, ermöglicht werden.

Das erfindungsgemäße Verfahren zur Befüllung einer erfindungsgemäßen Filtervorrichtung, insbesondere eines Hohlfaserdialysators, ermöglicht es, die zu Beginn der Befüllung im Außenraum, d.h. den die Hohlfasern umgebenden Raum, vorhandene Luft durch einen von oben nach unten durch das Filtergehäuse geführten Flüssigkeitsvolumenstrom verdrängt wird. Dabei beträgt der Flüssigkeitsvolumenstrom zur Befüllung des Filtergehäuses vorzugsweise ca. 500 ml/min. Es hat sich überraschend gezeigt, daß durch den erfindungsgemäßen Aufbau des Hohlfaserdialysators, wie er zuvor beschrieben wurde, beide Fluidkammern des Dialysators befüllt werden können, ohne den Dialysator um 180˚ drehen zu müssen. Der Dialysatraum kann nun von oben nach unten befüllt werden. Dabei kann die Befüllung gleichzeitig mit der blutseitigen Befüllung erfolgen, ohne daß hier der Dialysator gedreht werden müßte.

Aufgabe der Erfindung ist es, ein Verfahren zur Befüllung einer Filtervorrichtung zu schaffen, bei dem diese möglichst schnell und luftfrei befüllt werden kann.

Erfindungsgemäß wird diese Aufgabe ausgehend von der gattungsgemäßen Filtervorrichtung, die aus einem zylindrischen Filtergehäuse besteht und in welcher ein Bündel aus gelockten Hohlfasern angeordnet ist, durch die Befüllung einer Filtervorrichtung gelöst, die Hohlfasern mit einer weitgehend sinusförmigen Texturierung aufweisen und entsprechend folgender geometrischer Gesetzmäßigkeit gelockt sind:

$$5 \cdot d < \lambda < \frac{L}{12} \cdot \frac{1}{1 + 2\frac{D}{L}}$$

$$(1),$$

$$\frac{d}{5} < a < \frac{\lambda}{5} \qquad (2),$$

wobei $\lambda$ die Wellenlänge der gelockten Hohlfasern darstellt, d den Außendurchmesser der Hohlfaser, L die effektive Länge der Hohlfasern, D den Durchmesser des Faserbündels und a die Amplitude.

Nach dem Stand der Technik, bei dem das Faserbündel nicht so gleichmäßig und packungsdicht ist, muss zur luftfreien Befüllung des Systems, dieses bei vertikaler Filterstellung von unten nach oben befüllt werden. Da die Dialysierflüssigkeitspumpe und die Blutpumpe im allgemeinen entgegensetzt fördern, mußte die Befüllung der jeweiligen Kammer mit Dialysierflüssigkeit nach dem Stand der Technik dialysatseitig bzw. mit isotoner Kochsalzlösung blutseitig hintereinander erfolgen, wobei der Filter vor dem zweiten Schritt um 180° gedreht werden mußte.

Durch die geometriebezogene Definition der Lockung der einzelnen Hohlfasern des Hohlfaserbündels wird erreicht, daß der Strömungswiderstand in axialer Richtung, d.h. entlang der Fasern, relativ zum Strömungswiderstand ins Bündelinnere erhöht wird. Der letztere Strömungswiderstandswert wird dabei im allgemeinen sogar absolut vermindert. Dadurch gelingt es, daß bei der Dialyse der Anteil des Dialysats, der durch das Bündelinnere fließt, erhöht wird und damit die innenliegenden Hohlfasern besser genutzt werden. Auf diese Weise ergibt sich eine erhöhte Stoffaustauschleistung im Vergleich zu langweilig gelockten Fasern oder Fasern vollständig ohne Lockung. Hierfür dürften die Erzeugung einer turbulenten Strömung des die Hohlfaser umströmenden Fluids sowie die sich ergebende Flüssigkeitsverteilung als solche verantwortlich sein. Die Erfindung basiert auf der Erkenntnis, daß das Verhältnis des Flüssigkeitsteilstroms, der außerhalb des Faserbündels fließt, zum Flüssigkeitsteilstrom der durch das Bündel fließt, vom Verhältnis des Durchmessers des Faserbündels zu dessen genutzter Länge, sowie von den Strömungswiderständen in axialer Richtung (entlang der Fasern) und in radialer Richtung (quer zu den Fasern, in Richtung der Bündelmitte) abhängt.

Neben der Wellenlänge $\lambda$ spielt die Amplitude a bei der Wirksamkeit der Lockung der Hohlfasern eine zusätzliche Rolle. Daher weisen gemäß einer bevorzugten Ausführungsform der Erfindung die Hohlfasern folgende Amplitude a der weitgehend sinusförmigen Lockung gemäß Gleichung (2) auf:

Unterschreitet a den Wert von d/5, wird der Zwischenraum zwischen zwei nebeneinander liegenden Wellen (Wellenbauch) zu klein, um die nötige Dialysatmenge ins Innere des Faserbündels zu leiten. Wird dagegen a > $\lambda$/5 gewählt, so verliert der Dialysator dadurch an Effektivität, daß in einem vorgegebenen Dialysatorgehäuse die mögliche Packungsdichte des Faserbündels abnimmt.

Gemäß einer besonderen Ausgestaltung der Erfindung kann die Lockung der Hohlfaser eine dreidimensionale Ausrichtung gemäß der folgenden Formeln aufweisen:

$$\bar{x}(z) = \begin{pmatrix} a \cdot \sin\left(\frac{2\pi z}{\lambda} \cdot u\right) & \cdot \sin\left(\frac{2\pi z}{\lambda}\right) \\ a \cdot \cos\left(\frac{2\pi z}{\lambda} \cdot u\right) & \cdot \sin\left(\frac{2\pi z}{\lambda}\right) \\ & z \end{pmatrix} \qquad (3),$$

wobei gilt: 0,05 < u < 0,14, und wobei

$\bar{x}(z)$     den Raumvektor zwischen dem Koordinatenursprung und der räumlichen Position einer Hohlfaser darstellt, die sich entlang der z-Achse erstreckt, und

u     die Anzahl der Umdrehungen pro Wellenlänge $\lambda$.

Entsprechend der vorgenannten Gleichung läuft die Lockung der Hohlfasern zirkular um. Das bedeutet, daß der mathematische Vektor der Amplitude, der von der z-Achse ausgeht und an der Faser endet, innerhalb der Strecke $\lambda$ einen gewissen Winkelbereich durchläuft. Auf diese Weise entsteht eine dreidimensionale Struktur, die einer Helix ähnlich ist. Während es bei einer zweidimensionalen Struktur durchaus vorkommen kann, daß alle Fasern "umfallen" und so eine anisotrope Struktur bilden, die das Eindringen von Dialysat ins Bündel richtungsabhängig macht, ist ein dreidimensional gelocktes Faserbündel isotrop und gewährleistet ein von allen Seiten gleichmäßiges Eindringen des Dialysats in das Bündelinnere.

Vorteilhaft kann die Faserbelegung im zylindrischen Filtergehäuse zwischen 60,5% bis 70% betragen, noch vorteilhafter von 60,5% bis 67,5%. Bei diesen Packungsdichten ist eine dichte Packung mit Dichtung durch Verguß im Endbereich der Hohlfaserbündel möglich.

Besonders vorteilhaft kann die Faserbelegung im zylindrischen Filtergehäuse zwischen 63,5% bis 65,5% betragen. Die Faserbelegung errechnet sich hierbei aus den Prozenten der durch Fasern belegten Querschnittsfläche pro nutzbarer Querschnittsfläche im Filtergehäuse. Die nutzbare Querschnittsfläche ist das 0,907fache der Querschnittsfläche. Dieser Wert ergibt sich aus der maximalen Packungsdichte (hexagonale Anordnung), die einer Belegung von 100% entsprechen soll. Die oben angegebenen Belegungsangaben können insbesondere bei Verwendung der erfindungsgemäßen Abmessung der Hohlfasern erreicht werden und sorgen gleichzeitig dafür, daß die Polyurethanmasse beim Vergießen der Fasern gleichmäßig in das Faserbündel eindringt, ähnlich - wie zuvor beschrieben - , das Dialysat während der Dialyse gleichmäßig ins Bündelinnere gelangt. Gerade durch das gleichmäßige Eindringen der Polyurethanmasse, die anschließend erstarrt und das Faserbündel als solches an beiden Enden fixiert, kann die gleichmäßige Belegung des Faserbündels und somit die zuvor genannte hohe Packungsdichte erreicht werden.

Der erfindungsgemäße Effekt wird auch durch eine Kombination aus langgestreckten flachen und dreidimensional gelockten Fasern erzielt, wenn mindestens 10% dreidimensional gelockter Fasern im Faserbündel verwendet werden.

Die Erfindung beinhaltet auch eine gelockte Hohlfaser zum wahlweisen Einsatz in Form eines Bündels in Hohlfaserdialysatoren, die unterschiedliche Durchmesser D von einem minimalen Durchmesser $D_{Min}$ bis zu einem maximalen Durchmesser $D_{Max}$ aufweisen können. In diesem Fall soll möglichst eine optimale Hohlfasergestalt bereitgestellt werden, die für Hohlfaserdialysatoren unterschiedlichster Durchmesser Anwendung finden kann. Die gelockte Hohlfaser für den Einsatz in Filtergehäusen unterschiedlicher Durchmesser ergibt sich dabei aus folgender Gleichung:

$$5 \cdot d < \lambda < \frac{L}{12} \cdot \frac{1}{1 + 2\dfrac{DMax}{L}} \qquad (4),$$

wobei $\lambda$ die Wellenlänge der gelockten Hohlfaser darstellt, d den Durchmesser der Hohlfaser, L die effektive Länge der Hohlfasern und $D_{Max}$ den Durchmesser des Faserbündels für das Filtergehäuse mit dem maximalen Innendurchmesser.

Eine beispielhafte Ausführungsform der Hohlfasern besteht aus 90 bis 99 Gewichtsprozent eines hydrophoben ersten Polymers und 10 bis 1 Gewichtsprozent eines hydrophilen zweiten Polymers, wobei die hydrophoben ersten Polymere aus folgender Gruppe ausgewählt sind: Polyarylsulfone, Polycarbonate, Polyamide, Polyvinylchlorid, modifizierte Acrylsäure, Polyether, Polyurethane oder deren Co-Polymere und wobei die hydrophilen zweiten Polymere aus folgender Gruppe ausgewählt sind: Polyvinylpyrrolidon, Polyethylenglycol, Polyglycolmonoesther, Co-Polymere von Polyethylenglycol mit Polypropylenglycol, wasserlösliche Derivate der Zellulose oder Polysorbate. Diese Zusammensetzung der mikroporösen Hohlfasern ist bereits ausführlich in der EP 0168783 A1 beschrieben, der auch weitere Details zu diesem Beispiel zu entnehmen sind.

Weitere Beispiele für die Gestaltung der Hohlfasern bezüglich Zusammensetzung und Morphologie finden sich in der EP 0 305 787 A1 sowie in der Auslegeschrift DE 21 45 183. Auf die Offenbarung dieser Schriften wird ausdrücklich Bezug genommen.

Die Durchführung des erfindungsgemäßen Verfahrens ermöglicht eine schnelle und vor allem luftfreie Befüllung des Systems. Die höhere Befüllungsgeschwindigkeit ergibt sich daher, daß beide Fluidkammern des Dialysators, d.h. die dialysatseitige und die blutseitige Kammer gleichzeitig befüllt werden können, ohne daß die Filtervorrichtung gedreht werden muß.

Weitere Einzelheiten der Erfindung werden anhand eines in der Zeichnung dargestellten Ausführungsbeispiels näher erläutert.

Es zeigen:

Fig. 1: einen Längsschnitt bzw. Querschnitt durch ein Hohlfaserbündel und

Fig. 2: die Geometrie einer einzelnen Hohlfaser gemäß der vorliegenden Erfindung.

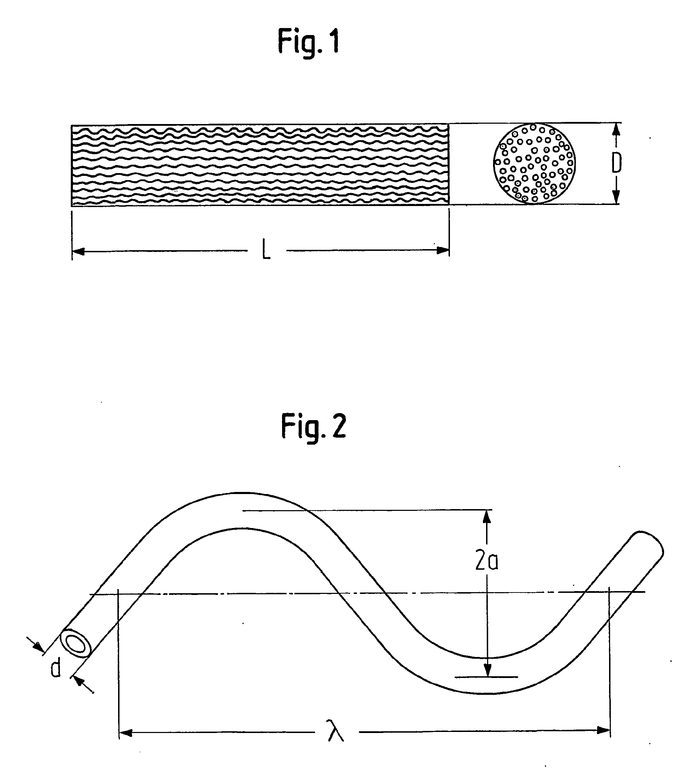

In Figur 1 ist ein mikrogelocktes Hohlfaserbündel der effektiven Länge L mit dem Durchmesser D dargestellt.

Dieses ist in an sich bekannter Art und Weise üblicherweise in einem hier nicht näher dargestellten Filtergehäuse angeordnet. Der Aufbau einer Filtervorrichtung ist an sich umfassend bekannt und wird daher hier nicht im einzelnen beschrieben. Allgemein besteht jedenfalls eine bekannte Filtervorrichtung, wie beispielsweise ein Hohlfaserdialysator, aus einem rohrförmigen Gehäuse, das das Hohlfaserbündel einfaßt, wobei die Enden des Hohlfaserbündels durch eine Vergußmasse mit den Enden des rohrförmigen Gehäuses verbunden sind. Bei dieser Filtervorrichtung ist das Gehäuse jeweils eingrenzend an die Vergußmassen mit radialen Anschlußstutzen versehen, die die Ein- und Ausgänge zu dem zweiten Strömungsraum bilden. Zur Öffnung der von den Vergußmassen eingefaßten Kapillarröhren des Hohlfaserbündels werden diese an ihren Stirnseiten angeschnitten.

Auf die Enden des rohrförmigen Mantels werden sodann dichtende Kappen aufgesetzt, die mit Stutzen versehen sind, die die Ein- und Ausgänge des ersten Strömungsraums bilden.

Im übrigen wird beispielhaft auf die Offenbarung der DE 198 57 850 und der EP-A-0844015 verwiesen.

Gemäß der Erfindung wird eine möglichst sinusförmige Texturierung von Hohlfasermembranen erzeugt, wobei die Wellenlänge $\lambda$ der periodischen Struktur eng verknüpft ist mit dem äußeren Durchmesser d der Hohlfaser (vgl. Fig. 2) sowie mit der effektiven Faserlänge L und dem Bündeldurchmesser D (vgl. Fig. 1) des Faserbündels. Dabei bewegt sich das erfindungsgemäß optimale $\lambda$ in folgendem Bereich:

$$5 \cdot d < \lambda < \frac{L}{12} \cdot \frac{1}{1 + 2\frac{D}{L}} \qquad (1),$$

Nach der Gleichung 1 ist es nicht sinnvoll, die Wellenlänge kleiner zu wählen als das fünffache des Außendurchmessers d der Faser (Fig. 2). Dies kann dadurch erklärt werden, daß bei Unterschreitung von 5 d keine Wellenbäuche mehr in der Hohlfaser entstehen, die dem Dialysat den Weg ins Faserinnere ermöglichen. Nach oben hin ist die Wellenlänge $\lambda$ beschränkt durch die Wirksamkeit bei der Leistungssteigerung. Dabei wurde überraschend gefunden, daß es für "dünne Dialysatoren", d.h. Durchmesser- zu Längenverhältnisse von D/L < 0,14, bei gängigen Faserdurchmessern ausreichend ist, wenn 12 Wellenlängen pro Faserlänge L vorhanden sind. Bei "dickeren Dialysatoren" mit einem ungünstigen Verhältnis von Durchmesser zu Länge, d.h. von D/L, wird es bei gleicher Wellenlänge $\lambda$ schwieriger für das Dialysat in die Mitte des Faserbündels zu gelangen. Um dies zu kompensieren, wird in der Gleichung die Geometrie bei der Berechnung der maximalen Wellenlänge mit dem Faktor 1/(1+2 D/L) berücksichtigt.

Soll für alle Dialysatorgrößen für eine Hohlfaser die gleiche Wellenlänge $\lambda$ benutzt werden, so muß in der Gleichung (1) D durch den maximalen Durchmesser $D_{Max}$ ersetzt werden. Hierdurch wird erreicht, daß eine Durchdringung des Faserbündels auch bei ungünstigen Durchmesser- zu Längenverhältnissen gewährleistet ist. Erst recht werden dann vergleichsweise schlankere Dialysatoren von dem Dialysat durchströmt.

Für Dialysefasern mit einem Durchmesser von d=0,28 mm und dem Dialysator mit der größten Dicke, der eine effektive Länge von L=225 mm und einen maximalen Innendurchmesser von $D_{Max}$=48 mm aufweist, ergibt sich ein Bereich für die Wellenlänge $\lambda$ von

$$1,4 \text{ mm} < \lambda < 13,1 \text{ mm}.$$

In der Praxis haben sich Werte für die Wellenlänge $\lambda$ von

$$4 \text{ mm} < \lambda < 12 \text{ mm}$$

als besonders effektiv herausgestellt.

Neben der Wellenlänge $\lambda$ spielt auch die Amplitude eine wichtige Rolle bei der Wirksamkeit der Mikrolockung. Die Amplitude a (vgl. Fig. 2) sollte sich dabei im folgenden Bereich bewegen:

$$\frac{d}{5} < a < \frac{\lambda}{5}$$

$$(2).$$

Unterschreitet a den Wert von d/5, wird der Zwischenraum zwischen zwei nebeneinander liegenden Wellen zu klein, um die nötige Dialysatmenge ins Innere des Faserbündels zu leiten.

Wird dagegen a größer als $\lambda/5$ gewählt, so wird eine vergleichsweise geringere Packungsdichte in Kauf genommen, die zu einem Absinken der Effektivität des Stoffaustausches führt.

Mittels der sogenannten Mikrolockung wird es gewährleistet, daß überall entlang der Hohlfasern durch die Wellenbäuche das Dialysat ins Hohlfaserbündelinnere geleitet wird und gleichzeitig die Strömung entlang der Hohlfasern immer wieder abgelenkt und gebremst wird. Hierdurch kann ein optimaler Stoffaustausch entlang der Austauschfläche erfolgen.

Besondere Vorteile ergeben sich bei Verwendung der mit der vorgenannten Mikrolockung versehenen Hohlfasern in Form eines dichtgepackten Faserbündels, insbesondere entsprechend der zuvor im einzelnen diskutierten Packungsdichte, da eine Filtervorrichtung mit einer derartigen Hohlfaserpackung einfacher befüllt werden kann. Hier können beide Fluidkammern, nämlich die dialysatseitige sowie die blutseitige Kammer, gleichzeitig und insbesondere luftfrei befüllt werden. Hieraus ergibt sich ein entscheidender Vorteil gegenüber dem bisherigen Stand der Technik, bei dem die Kammer für die Dialysierflüssigkeit und die blutseitige Kammer nacheinander befüllt werden mussten, wobei zusätzlich die Filtervorrichtung zum luftfreien Befüllen um 180 Grad gedreht werden musste. Dies bedingte eine kompliziertere Handhabung, die bei Verwendung der erfindungsgemäßen mikrogelockten Hohlfaser in der erfindungsgemäßen Filtervorrichtung nicht mehr notwendig ist.

**Patentansprüche**

1. Verfahren zur Befüllung einer Filtervorrichtung, vorzugsweise eines Hohlfaserdialysators für die Hämodialyse, bestehend aus einem zylindrischen Filtergehäuse und einem in diesem angeordneten Bündel aus gelockten Hohlfasern mit einer periodischen Texturierung, wobei alle Hohlfasern entsprechend folgender geometrischer Gesetzmäßigkeiten gelockt sind:

$$5 \cdot d < \lambda < \frac{L}{12} \cdot \frac{1}{1 + 2\frac{D}{L}}$$

$$(1),$$

$$\frac{d}{5} < a < \frac{\lambda}{5}$$

$$(2),$$

wobei $\lambda$ die Wellenlänge der gelockten Hohlfaser darstellt,
d den Außendurchmesser der Hohlfaser,
L die effektive Länge der Hohlfasern,
D den Durchmesser des Faserbündels und
a die Amplitude der Lockung,
bei dem die zu Beginn der Befüllung im Außenraum vorhandene Luft durch einen von oben nach unten durch das Filtergehäuse geführten Flüssigkeitsvolumenstrom verdrängt wird.

2. Verfahren nach Anspruch 1, **dadurch gekennzeichnet, daß** die Lockung der verwendeten Hohlfasern eine dreidimensionale Ausrichtung gemäß der folgenden

Formeln aufweist:

$$\vec{x}(z) = \begin{pmatrix} a \cdot \sin\left(\dfrac{2\pi z}{\lambda} \cdot u\right) & \cdot \sin\left(\dfrac{2\pi z}{\lambda}\right) \\[2ex] a \cdot \cos\left(\dfrac{2\pi z}{\lambda} \cdot u\right) & \cdot \sin\left(\dfrac{2\pi z}{\lambda}\right) \\[2ex] & z \\[1ex] \end{pmatrix} \qquad (3),$$

wobei gilt:
$0{,}05 < u < 0{,}14$, und wobei

$\bar{x}(z)$ den Raumvektor zwischen dem Koordinatenursprung und der räumlichen Position einer Hohlfaser darstellt, die sich entlang der z-Achse erstreckt, und

u die Anzahl der Umdrehungen pro Wellenlänge $\lambda$.

3.  Verfahren nach Anspruch 1 oder 2, **dadurch gekennzeichnet, daß** befüllte Filtervorrichtung eine Faserbelegung im zylindrischen Filtergehäuse von 60,5% bis 70% aufweist.

4.  Verfahren nach einem der vorhergehenden Ansprüche, **dadurch gekennzeichnet, daß** befüllte Filtervorrichtung eine Faserbelegung im zylindrischen Filtergehäuse von 60,5% bis 67,5% aufweist.

5.  Verfahren nach einem der vorhergehenden Ansprüche, **dadurch gekennzeichnet, daß** befüllte Filtervorrichtung eine Faserbelegung im zylindrischen Filtergehäuse von 63,5% bis 65,5% aufweist.

6.  Verfahren nach Anspruch 5, **dadurch gekennzeichnet, daß** zumindest 10% der Hohlfasern dreidimensional gelockte Hohlfasern sind.

7.  Verfahren nach einem der Ansprüche 1 bis 6, **dadurch gekennzeichnet, daß** die in der befüllten Filtervorrichtung verwendeten Hohlfasern jeweils aus 90 bis 99 Gewichtsprozent eines hydrophoben ersten Polymers und 10 bis 1 Gewichtsprozent eines hydrophilen zweiten Polymers bestehen, wobei die hydrophoben ersten Polymere aus folgender Gruppe ausgewählt sind: Polyarylsulfone, Polycarbonate, Polyamide, Polyvinylchlorid, modifizierte Acrylsäure, Polyether, Polyurethane oder deren Co-Polymere und wobei die hydrophilen zweiten Polymere aus folgender Gruppe ausgewählt sind: Polyvinylpyrrolidon, Polyethylenglycol, Polyglycolmonoester, Co-Polymere von Polyethylenglycol mit Polypropylenglycol, wasserlösliche Derivate der Zellulose oder Polysorbate.

8.  Verfahren nach einem der Ansprüche 1 bis 7, **dadurch gekennzeichnet, daß** der Flüssigkeitsvolumenstrom ca. 500ml/min. beträgt.

**Claims**

1.  A method of filling a filter device, preferably a hollow fibre dialyser for haemodialysis, comprising a cylindrical filter housing and a bundle arranged therein of curled hollow fibres with periodic texturing, wherein all hollow fibres are curled in accordance with the following geometrical patterns:

$$5 \cdot d < \lambda < \frac{L}{12} \cdot \frac{1}{1 + 2\dfrac{D}{L}} \qquad (1),$$

$$\frac{d}{5} < a < \frac{\lambda}{5} \qquad (2),$$

wherein:

$\Delta$ represents the wavelength of the curled hollow fibre,
d represents the outside diameter of the hollow fibre,
L represents the effective length of the hollow fibres,
D represents the diameter of the fibre bundle and
a represents the amplitude of the curl,

in which the air present at the beginning of the filling operation in the outside space is displaced by a fluid volume flow which is guided downwardly through the filter housing.

2. A method according to claim 1 **characterised in that** the curl of the hollow fibres used is of a three-dimensional orientation in accordance with the following formula:

$$\overline{x}(z) = \begin{pmatrix} a \cdot sin\left(\frac{2\pi z}{\lambda} \cdot u\right) \cdot sin\left(\frac{2\pi z}{\lambda}\right) \\ a \cdot cos\left(\frac{2\pi z}{\lambda} \cdot u\right) \cdot sin\left(\frac{2\pi z}{\lambda}\right) \\ z \end{pmatrix} \qquad (3)$$

wherein:

$0.05 < u < 0.14$, and wherein

$\overline{x}(z)$ represents the space vector between the co-ordinate origin and the spatial position of a hollow fibre which extends along the z-axis, and
u represents the number of rotations per wavelength $\lambda$.

3. A method according to claim 1 or claim 2 **characterised in that** the filled filter device has a filter occupation in the cylindrical filter housing of 60.5% to 70%.

4. A method according to one of the preceding claims **characterised in that** the filled filter device has a filter occupation in the cylindrical filter housing of 60.5% to 67.5%.

5. A method according to one of the preceding claims **characterised in that** the filled filter device has a filter occupation in the cylindrical filter housing of 63.5% to 65.5%.

6. A method according to claim 5 **characterised in that** at least 10% of the hollow fibres are three-dimensionally curled hollow fibres.

7. A method according to one of claims 1 to 6 **characterised in that** the hollow fibres used in the filled filter device respectively comprise 90 to 99 percent by weight of a hydrophobic first polymer and 10 to 1 percent by weight of a hydrophilic second polymer, wherein the hydrophobic first polymers are selected from the following group: polyarylsulphones, polycarbonates, polyamides, polyvinyl chloride, modified acrylic acid, polyethers, polyurethanes or their co-polymers, and wherein the hydrophilic second polymers are selected from the following group: polyvinylpyrrolidone, polyethylene glycol, polyglycol monoester, co-polymers of polyethylene glycol with polypropylene glycol, water-soluble derivatives of cellulose or polysorbates.

8. A method according to one of claims 1 to 7 **characterised in that** the fluid volume flow is about 500 ml/mm.

**Revendications**

1. Procédé pour le remplissage d'un dispositif de filtration, de préférence un dialyseur à fibres creuses pour l'hémodialyse, comprenant un boîtier de filtre cylindrique et un faisceau, disposé dans ce boîtier, de fibres creuses bouclées avec une texturation périodique, toutes les fibres creuses étant bouclées selon les lois générales géométriques suivantes:

$$5.d < \lambda < \frac{L}{12} \bullet \frac{1}{1+2\dfrac{D}{L}} \qquad (1)$$

$$\frac{d}{5} < a < \frac{\lambda}{5} \qquad (2)$$

λ représentant la longueur d'onde de la fibre creuse bouclée,
d le diamètre extérieur de la fibre creuse,
L la longueur effective des fibres creuses,
D le diamètre du faisceau de fibres et
a l'amplitude du bouclage,
dans lequel l'air présent dans l'espace extérieur au début du remplissage est refroidi par un flux volumique de liquide guidé du haut vers le bas à travers le boîtier de filtre.

2. Procédé selon la revendication 1, **caractérisé en ce que** le bouclage des fibres creuses utilisées présente une orientation dans trois dimensions selon les formules suivantes:

$$\overline{x}(z) = \begin{pmatrix} a.\sin\left(\dfrac{2\pi z}{\lambda} \bullet u\right) \bullet \sin\left(\dfrac{2\pi z}{\lambda}\right) \\ a.\cos\left(\dfrac{2\pi z}{\lambda} \bullet u\right) \bullet \sin\left(\dfrac{2\pi z}{\lambda}\right) \end{pmatrix} \qquad (3)$$

sachant que:

0,05 < u < 0,14, et
$\overline{x}(z)$ représentant le vecteur spatial entre l'origine des coordonnées et la position dans l'espace d'une fibre creuse, qui s'étend le long de l'axe z et
u le nombre de rotations par longueur d'onde λ.

3. Procédé selon la revendication 1 ou 2, **caractérisé en ce que** le dispositif de filtration rempli présente une occupation de fibre dans le boîtier de filtre cylindrique de 60,5 % à 70 %.

4. Procédé selon l'une quelconque des revendications précédentes, **caractérisé en ce que** le dispositif de filtration rempli présente une occupation de fibre dans le boîtier de filtre cylindrique de 60,5 % à 67,5 %.

5. Procédé selon l'une quelconque des revendications précédentes, **caractérisé en ce que** le dispositif de filtration rempli présente une occupation de fibre dans le boîtier de filtre cylindrique de 63,5 % à 65,5 %.

6. Procédé selon la revendication 5, **caractérisé en ce qu'**au moins 10 % des fibres creuses présentent des fibres creuses bouclées dans trois dimensions.

7. Procédé selon l'une quelconque des revendications 1 à 6, **caractérisé en ce que** les fibres creuses utilisées dans le dispositif de filtrage rempli se composent chacune de 90 à 99 % en poids d'un premier polymère hydrophobe et de 10 à 1 % en poids d'un second polymère hydrophile, les premiers polymères hydrophobes étant choisis dans le groupe suivant: polyarisulfones, polycarbonates, polyamides, chlorure de polyvinyle, acide acrylique modifié, polyéther, polyuréthannes ou leurs copolymères et les seconds polymères hydrophiles étant choisis dans le groupe suivant: polyvinylpyrrolidone, polyéthylèneglycol, monoester de polyglycol, copolymères de polyéthylèneglycol avec polypropylèneglycol, dérivés solubles à l'eau de la cellulose ou polysorbates.

8. Procédé selon l'une quelconque des revendications 1 à 7, **caractérisé en ce que** le flux volumique de liquide est d'environ 500 ml/minute.

# Fig. 1

# Fig. 2